# EUROPEAN PATENT APPLICATION

(11) **EP 2 487 920 A2**
(43) Date of publication of application: **15.08.2012**
(21) Application number: 12154551.1
(22) Date of filing: 08.02.2012
(51) Int. Cl.: H04N 21/44

(54) **Apparatus, and associated method, by which to play out media data pursuant to a media data service**

(30) Priority: 11.02.2011 US 201161442101 P
(71) Applicant: Research In Motion Limited, Waterloo, ON N2L 3W8 (CA)
(72) Inventor: Bredin, Robert John Thomas, Waterloo, Ontario N2L 3W8 (CA); Vanpee, Brian Jeffrey, Waterloo, Ontario N2L 3W8 (CA); Choudhry, Sulman, Waterloo, Ontario N2L 3W8 (CA)
(74) Representative: Fennell, Gareth Charles

(57) **Abstract**

An apparatus, and an associated method facilitates play out of media data pursuant to a media data service in which the media data is susceptible to modification during play out. A calculator calculates a value indicative of a buffer level of media data buffered pursuant to play out during performance of the media data service. The calculated value is evaluated. And, the reading of media data is caused to be slowed or stopped if the calculated value indicates an increasing buffer level.

## Description

### Cross-Reference of Related Application

The present application claims the benefit of U.S. Provisional Application serial no. 61/442,101 filed on February 11, 2011, the contents of which are incorporated herein by reference.

The present invention relates generally to a manner by which to facilitate play out of media data pursuant to a streaming, or other, media data service. More particularly, the present invention relates to an apparatus, and associated method, by which to control streaming of media data played out during performance of the media data service.

Operation is selected to cause only a small amount of media data to be buffered during play-out. Reducing the amount of buffered data permits reduced delay in the play out modified data read from a streaming, media-data source.

### Background

Recent years have witnessed the development and deployment of many new devices and systems that provide for many new services and functions. For many, such new services and functions are used frequently and, in some, instances, such services and functions everyday business and personal use.

Mobile communication systems, and mobile communication devices operable therein, for instance, are used by many for both business and personal use. Network infrastructures of cellular communication systems have been deployed over significant portions of the populated areas of the world. When a mobile device is positioned within the coverage area of the network infrastructure, and the mobile device is permitted access to the network infrastructure, the mobile devices is able to communicate by way of the network infrastructure. Various other radio communication systems have analogously been developed and deployed and are also operable to provide for communication services with mobile communication, and other wireless, devices.

Multiple generations of cellular, and cellular-like, communication systems have been developed and deployed. Early-generation systems generally provided a voice communication services and limited data communication services. Successor-generation systems provide greater data-intensive, data communication services. New-generation systems, for instance, provide for the communication of large amounts of data to carry out performance of many data-intensive communication services.

The computational capabilities of wireless devices operable in such new-generation, communication systems are typically significant. Such devices permit the performance of computationally-complex operations to carry out many varied functionalities. And, therefore, many new-generations, wireless devices are able to carry out any of multiple functionalities. Such functionalities often times, but not necessarily, are associated with communication services.

Typically, digital communication techniques are utilized by such devices and the systems in which such devices are operable. Digital communication techniques permit redundancies in data that is to be communicated to be removed prior to communication of the data. Thereby, the bandwidths required to carry out a communication service are reduced. And, for a given bandwidth, increased communication throughput is provided. When information is digitized, and formatted into data packets, information that is to be communicated can be communicated in discrete bursts. And, a single channel can be shared pursuant to a multiple access scheme.

A functionality sometimes implemented at a wireless, or other electronic, device is a media play-out functionality. Media play-out functionality is also implemented in standalone media-player, or other, devices. Media play-out functionality provides for the play out of audio, video, or multimedia content. A so-called, mp3 player is exemplary of a media play out device or functionality. Media play-out functionality is also utilized in VOIP (Voice Over Internet Protocol) services and gaming services that utilize sound-effect mixing.

In an exemplary streaming service that utilizes media play-out functionality at a wireless device, media data is downloaded to the device and made available for play-out pursuant to the media play-out functionality.

When the media data is played out pursuant to performance of a media data service, the media data is streamed to a buffer, and the buffered data is played out and transduced, or otherwise converted, into human perceptible form.

While existing schemes by which to play-out the data are generally adequate for media data that does not change while being streamed, some services require that the media data be modified while streamed. The aforementioned VOIP applications and also, e.g., gaming applications that utilize sound-effect mixing, for instance, sometimes require that data to be modified while the data is streamed.

An improved mechanism by which to play-out media data pursuant to a media service is therefore required.

It is in light of this background information related to media services that the significant improvements of the present disclosure have evolved.

### Brief Description of the Drawings

Figure 1 illustrates a functional block diagram of a communication system in which an implementation of the present disclosure is operable.

Figure 2 illustrates a process diagram representative of the process of operation of an implementation of the present disclosure.

Figure 3 illustrates a diagram also representative of the process of operation of an implementation of the present disclosure.

Figure 4 illustrates a method flow diagram representative of the method of operation of an implementation of the present disclosure.

### Detailed Description

The present disclosure, accordingly, advantageously provides an apparatus, and an associated method, by which to facilitate play-out of media data pursuant to a streaming, or other, media service.

Through operation of an implementation of the present disclosure, a manner is provided by which to control streaming of media data played-out during performance of the media data service.

In one aspect of the present disclosure, the operation is selected to cause only a small amount of media data to be buffered during play-out. The amount of buffered data is reduced, and the reduction permits reduced delay in the play-out of modified data read from a streaming, media-data source.

In another aspect of the present disclosure, operation of a streaming engine is manipulated to cause the streaming engine, used pursuant to play-out of the media data, into a behavior in which normal, intermediate buffering is performed, thereby resulting in little delay in play-out of modified data read from a streaming media data source,

In another aspect of the present disclosure, control is exerted over a streaming media source. The streaming media source comprises, for instance, a memory element to which media data is downloaded and is available for play-out when performance of a streaming media service is selected. The control exerted over the streaming media source controls the release of the media data for reading by a data reader of a streaming engine. Control is exerted, e.g., to reduce the rate of release of the data to reduce the rate at which data is read or to prevent release of data for a selected period,

In another aspect of the present disclosure, the control is exerted by a controller to control the release of the streaming media data from the streaming media source pursuant to performance of a selected application in which the data is susceptible to modification while the data is streamed. When so-selected, the controller causes the streaming media source to release media data in a manner to cause media data buffered in an intermediate buffer to be reduced, i.e., "starved". A data reader that reads the streaming media data sourced at the streaming media data source attempts quickly to read additional streaming media data to replenish the intermediate buffer. Thereby, the responsiveness of the read-write cycle of the media play out function is increased, thereby also improving the media service that utilizes data susceptible to modification.

In another aspect of the present disclosure, a calculation is performed to calculate a value that is indicative of the level of media data buffered at the buffer. That is to say, the calculator calculates a buffer level of the media data buffered at the buffer. The calculated value, once obtained, is used to select the release of streaming media data by the streaming media source that results in a change in the buffer level, i.e., the amount of media data buffered at the buffer.

In another aspect of the present disclosure, the value calculated by the calculator is a function of the amount of media data played out pursuant to the performance of the media data service. The amount of media data is determined based upon the amount of time during which the media data service has been performed, i.e., the time since the start of the play out of the data, multiplied by the rate of play out, i.e., the media byte rate.

In another aspect of the present disclosure, the value calculated by the calculator is further a function of the amount of data already streamed by the streaming media data source. That is to say, the value calculated by the calculator is further a function of the amount of media data read by the data reader of the streaming engine. In another aspect of the present disclosure, the value calculated by the calculator is a function of the product of the amount of media data played out pursuant to the media data service summed together with a constant value less the amount of data already streamed by the streaming media data source. If the result is a negative value then the controller exerts control of the streaming media source to delay streaming of additional media data for a selected period and, conversely, if the result is a positive value, then the controller of the streaming media data source permits streaming media data to continue to be released and read and buffered.

In another aspect of the present disclosure, an indicator is provided with the value calculated by the calculator. The indicator generates an indication of the value, and the indication is provided and used to select the subsequent release of media data by the streaming media source.

In another aspect of the present disclosure, the controller includes a detector for detecting the indication generated by the indicator of the indication. And, the detected indication is evaluated by an evaluator. Responsive to the evaluation, the rate of delivery, i.e., release, of the streaming media data by the streaming media data source is controlled.

In these and further aspects, therefore, an apparatus, and an associated method, is provided for facilitating play out of media data at an electronic device. A calculator is configured to calculate a value, during play out the media data, indicative of a buffer level of media data buffered at the electronic device. An indicator is configured to generate an indication of the value calculated by the calculator. The indication is for use to select whether to change delivery of the media data.

In these and further aspects, further apparatus, and an associated method, is provided for facilitating a media data service. A detector is configured to detect an indication of a value indicative of a buffer level of media buffered and awaiting play out pursuant to a media data service. An evaluator is configured to evaluate the indication and to select whether to change delivery of the media data.

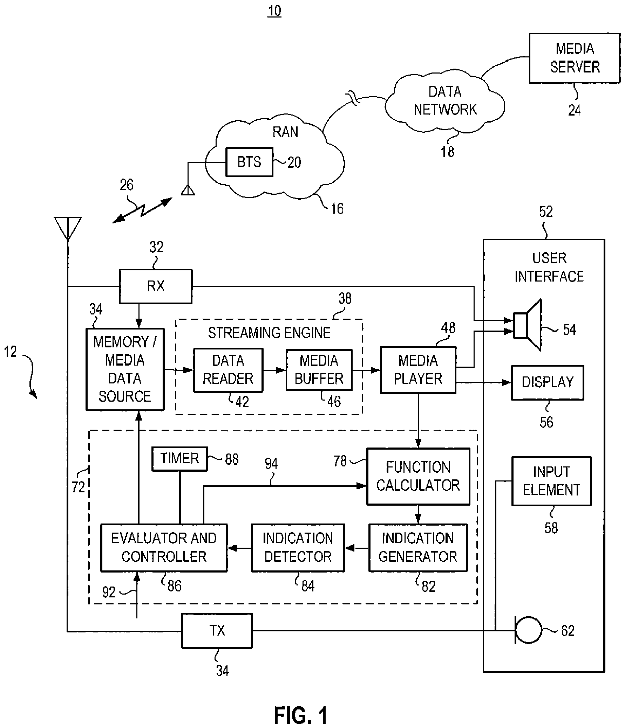

Turning first, therefore, to Figure 1, a communication system, shown generally at 10, provides for communication with wireless devices, such as the wireless device 12. In the exemplary implementation, the communication system 10 comprises a cellular communication system operable in general conformity with an operating specification of an appropriate cellular communication system standard. The communication system is, however, representative of any of various communication systems, both radio and wire line systems. While the following description shall describe exemplary operation in which the communication system 10 comprises a cellular communication system, operation of an implementation of the present disclosure is analogously implementable in device operable in other communication systems as well as in standalone devices.

The communication system includes a network infrastructure, here including a radio access network (RAN) 16 and a data network 18, such as the internet. Communication devices and entities are connectible to the data network. Here, a media server 24 is placed in communication connectivity with the network 18. And, a base transceiver station (BTS) 20 is embodied at the RAN 16.

Communications are carried out with the wireless device by way of radio channels 26 represented by the arrow, defined upon a radio air interface formed between the radio access network and the wireless device. Information originated at the wireless device is communicated to the network by way of radio channels defined upon the radio air interface, and information originated at the network is communicated to the wireless device by way of radio channels defined upon the radio air interface.

The wireless device includes transceiver circuitry, here represented by a receive (Rx) part 32 and a transmit (Tx) part 34. In exemplary operation, media data sourced at the media server 24 is down-loaded to the wireless device by routing the media data through the data network 18 and the radio access network 16, and transmitting the media data upon radio channels defined upon the radio air interface. The media data is downloaded to the wireless device either automatically or responsive to a request for the media data. The media data sent to the wireless device is detected by the receive part 32, and the received media data is stored at a storage element 34. The stored media data at the memory element 34 forms a streaming media data source pursuant to a media data service performed by the wireless device.

The wireless device further includes a streaming engine 38 that includes a data reader 42 and a buffer 46. The wireless device further includes a media player 48 that plays out media data provided thereto by the streaming engine 38. The media data caused to be played out by the media player is transduced into human perceptible form at a user interface 52, such as at a speaker 54 or display element 56 of the user interface. The user interface is here shown further to include an input element 58, such as a keyboard or keypad actuator, and a microphone 62.

As mentioned previously, conventional operations in which the data reader reads data from the streaming data source comprised of the memory 34 at a rate greater than that at which the media player 48 plays out the media data, resulting in an increase in the buffer level, i.e., the amount of media data buffered at the buffer 46. While this operation is adequate for media streaming of typical audio and video content, this operation is inadequate for media applications in which the media data is modified while streamed, such as might occur in a VoIP application or gaming application. For instance, the wireless device may have limited audio channels available. If two different sounds are required to be played, and only a single audio channel is available, then the different sounds must be combined by modifying the media data.

The device 12 further includes an apparatus 72 of an implementation of the present disclosure. The apparatus facilitates improved play out of the media data in an application in which the media data is susceptible to modification while being streamed. The apparatus is formed of functional elements, implementable in any desired manner including hardware elements, firmware elements, algorithm executable by processing circuitry, and combinations thereof. The apparatus is here shown to include a function calculator 78, an indication generator 82, an indicator detector 84, an evaluator and controller 86, and a timer 88.

The apparatus operates when a media-service application is performed in which the media data is susceptible to modification during play out of the data. An indication of operation of the play out of the data in this manner is provided to the apparatus, here indicated by way of the line 92. The indication is provided, for instance, responsive to invocation of a media-data service responsive to user input by way of the input element 58 or from an application associated with the invoked, media service. Once invoked, the evaluator and controller 86 causes, here indicated by the line 94, the function calculator to calculate a value that is indicative of the play out of the media data. Specifically, the function calculator calculates a value that indicates whether the buffer level, i.e., the amount of data buffered at the buffer 46, the intermediate buffer, is increasing.

In the exemplary implementation, the value is the product of the time since the start of the media play out times the media byte rate added together with a constant value less the amount of data already played out by the media player. The constant value is, e.g., a value corresponding to a minimum buffer level. If the value is a positive value, then the buffer level is not increasing. Conversely, if the value is a negative value, then the buffer level is increasing. A large, or increasing, amount of media data buffered at the intermediate buffer results in a delay in the play back of the modified data, which is detrimental to a good user experience in a media service having media data that is susceptible to modification.

The value calculated by the function calculator is provided to the indication generator 82. The indication generator generates an indication of the value. In one implementation, the indication generator 82 forms a message generator. The indication formed by the indication generator of the value calculated by the function calculator is also indicative of the behavior of the streaming engine and the buffering of media data pursuant to play out of the data.

The indication generated by the indication generator 82 is detected by the indication detector 84. When the indication generator 82 forms a message generator, the indication detector, correspondingly, forms a message detector. In an implementation in which the streaming engine is physically located disparate from the memory element 34 that forms the streaming media data source, the indication generator 82 and indication detector 86 are analogously disparately positioned and the elements are implemented by a message generator and detector, respectively. In one implementation, the message generated by the message generator comprises a Bluetooth ™ message, and the message indication detector comprises a receiver capable of receiving the message.

The indication detected by the indication detector is provided to the evaluator and controller 86. The evaluator and controller evaluate the detected indication. And, in response to the evaluation, the release of data by the streaming media data source formed at the memory element 34 is controlled. If the indication of the value calculated by the function calculator and detected by the indication detector is a negative value, control is exerted to prevent reading of media data sourced at the memory element 34 by the data reader. By reducing the amount of data permitted to be read, or preventing reading of data, reduces the amount of data buffered at the buffer 46. And, the streaming engine, in response to the depletion of buffered data, attempts quickly to read data from the streaming media data source, thereby increasing the responsiveness of a read-write cycle to facilitate the desired play-out behavior.

In the exemplary implementation, when the controller causes the memory element to be of characteristics to prevent reading of data therefrom by the data reader, the timer 88 commences timing for a time period. When the timer times out, an indication is provided to the evaluator and controller, and a new evaluation is performed and additional control is exerted. If a new value calculated by the function calculator is of a positive value, then the controller permits additional amounts of data to be read from the streaming media data source formed at the memory element 34. Otherwise, if still negative, then that is not made available to be read by the data reader.

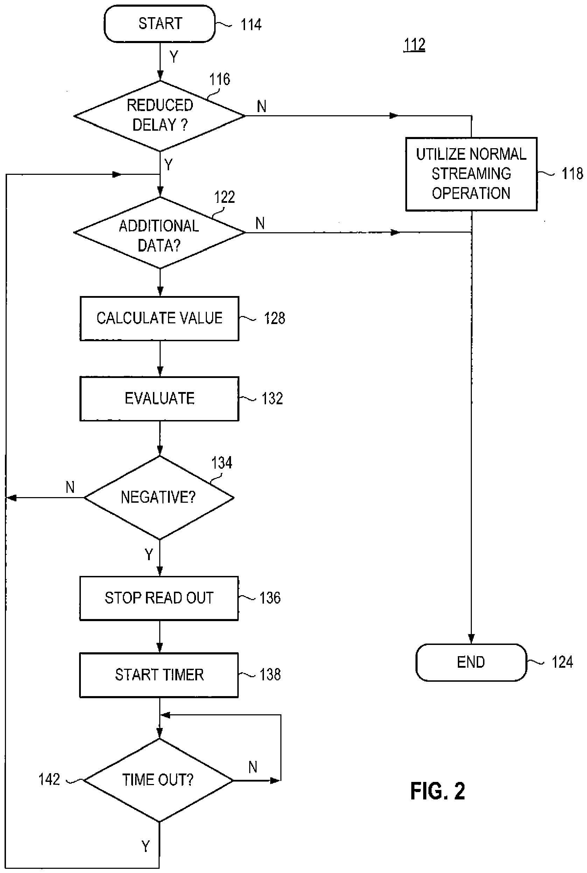

Figure 2 illustrates a process 112 of an implementation of the present disclosure. The process facilitates play out of media data at a device having media play out functionality.

First, subsequent to start of the process indicated by the start block 114, a determination is made at the decision block 116 as to whether the play out of media data should be with reduced-delay buffering. If not, the no branch is taken to the block 118 and play out of the data is performed in conventional manner.

If, conversely, the media service requires reduced delay buffering, the yes branch is taken from the decision block 116 to the decision block 122, and a determination is made as to whether additional data is to be played out. If not, the no branch is taken to the end block 124. If, conversely, additional media data is to be played out, then the yes branch is taken to the block 128, and a calculation is performed to form a value that is indicative of a buffer level of media data that is buffered pursuant to the play out of the media data pursuant to the media data service. Then, and as indicated by the block 132, an evaluation is made of the calculated value.

Thereafter, and as indicated by the decision block 134, a determination is made as to whether the calculated value is a negative value which indicates that the required buffer level is not greater than amount of data that has been buffered. If not, the no branch is taken back to the block 122. If, conversely, the value is a negative value which indicates that the required buffer level is greater than amount of data that has been buffered, the yes branch is taken to the block 136, and read out of data from a media data source is prevented. And, as indicated by the block 138, a timer is started.

Thereafter, and as indicated by the decision block 142, a determination is made as to whether the timer has timed out. If not, the no branch is taken, and monitoring is performed until the timer times out. When the timer times out, the yes branch is taken back to the block 122, and the determination is made as to whether additional media is to be played out.

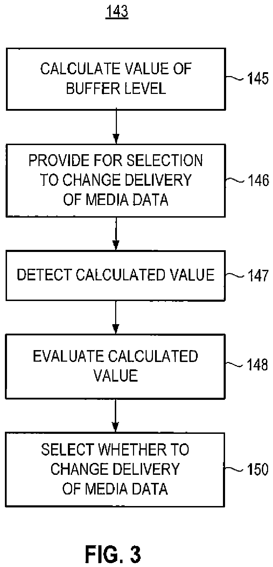

Figure 3 illustrates a process 143 representative of exemplary operation of an implementation of the present disclosure. The process 143 is carried out pursuant to play out of media data during performance of a media service. First, and as indicated by the block 145, a value of the buffer level is calculated. Then, and as indicated by the block 146, provision is made for selection to change delivery of the media data.

The calculated value is detected, as indicated by the block 147. And, as indicated by the block 148, the value is evaluated.

Thereafter, and as indicated by the block 150, selection is made whether to change the delivery of the media data. In some implementations, a mode of delivery is selected from either a delivery transmission speed that is slower such as no delivery in which no transmission of data is performed, the mode of delivery is selected from delivery in which data transmission continues.

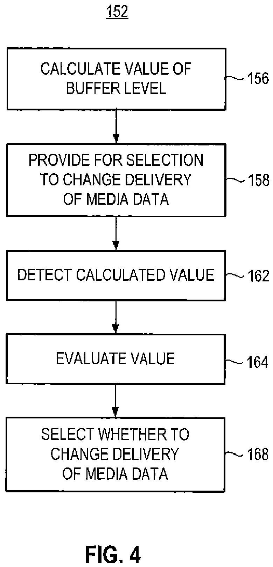

Figure 4 illustrates a method flow diagram, shown generally at 152 representative of the method of operation of an implementation of the present disclosure. The method facilitates play out of media data at an electronic device.

First, and as indicated by the block 156, a value is calculated during play out of the media data. The calculated value is indicative of a buffer level of media data buffered at the electronic device. Then, and as indicated by the block 158, provision is made for selection of whether to change delivery of the media data responsive to the calculated value.

Then, and as indicated by the block 162, an indication of the value is detected. And, as indicated by the block 164, the indication is evaluated. Then, and as indicated by the block 168, selection is made as to whether to change delivery of the media data responsive to the evaluation.

Thereby, a manner is provided by which to improve play out of data in a media service that utilizes media data that is susceptible to modification while the media data is played out.

Presently preferred implementations of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating play out of media data at an electronic device, the apparatus comprising:
a calculator configured to calculate a value, during play out of the media data, indicative of a buffer level of media data buffered at the electronic device;
an indicator configured to generate an indication of the value calculated by the calculator the indication for use to select whether to change delivery of the media data.

2. The apparatus of claim 1 wherein the calculator is configured to calculate a value that is function of an amount of media data played out at the electronic device and already-streamed media data.

3. The apparatus of any of claims 1 -2 wherein the value calculated by the calculator is of a level indicative of whether more media data than necessary has been received pursuant to the play out of the media data.

4. The apparatus of any of claims 1 - 3 further comprising a data reader configured to read the media data received pursuant to the data play out of the media data.

5. The apparatus of claim 4 further comprising a buffer configured to buffer the media data received pursuant to the play out of the media data and wherein the value indicative of the buffer level calculated by the calculator is indicative of the buffer level of the buffer.

6. The apparatus of any of claims 1 - 5 wherein said indicator is configured to generate a media-data-source-terminated message.

7. The apparatus of any of claims 1 - 6 further comprising:
an evaluator configured to evaluate the indication generated by said indicator.

8. The apparatus of claim 7 wherein said evaluator is further configured to control a rate of delivery of the media data responsive to an evaluation of the indication.

9. A method for facilitating play out of media data at an electronic device, the method comprising:
calculating a value, during play out of the media data, indicative of a buffer level of media data buffered at the electronic device; and
providing for selection of whether to change delivery of the media data responsive to the value calculated during the calculating.

10. The method of claim 9 wherein the calculating comprises calculating a value that is a function of an amount of media data played out at the electronic device and already-streamed media data.

11. The method of any of claims 9-10 wherein the value calculated during the calculating is of a level indicative of whether more media data than necessary has been received pursuant to the play out of the media data.

12. The method of any of claims 9-11 further comprising reading the media data received pursuant to the data play out of the media data.

13. The method of any of claims 9-12 further comprising buffering the media data received pursuant to the play out of the media data and wherein the value indicative of the buffer level calculated during the buffering is indicative of the buffer level media data buffered during the buffering.

14. The method of any of claims 9-13 wherein the providing for the selection comprises generating a message including an indication of the value calculated during the calculating.

15. The method of any of claims 9-14 further comprising evaluating a representation of the value calculated during said calculating and wherein selection of whether to change the delivery of the media data is responsive to evaluation during said evaluating.
